# EUROPEAN PATENT APPLICATION

(11) **EP 3 822 202 A1**
(43) Date of publication of application: **19.05.2021**
(21) Application number: 19858773.5
(22) Date of filing: 10.09.2019
(51) Int. Cl.: B65G 47/90, B25J 13/00

(54) **PICKING SYSTEM, INFORMATION PROCESSING DEVICE, AND COMPUTER-READABLE RECORDING MEDIUM**

(30) Priority: 10.09.2018 JP 2018169076
(71) Applicant: Kabushiki Kaisha Toshiba, Minato-ku, Tokyo 105-8001 (JP); Toshiba Infrastructure Systems & Solutions Corporation, Kawasaki-shi, Kanagawa 212-0013 (JP)
(72) Inventor: SEKIGUCHI, Kana, Kawasaki-shi, Kanagawa 212-0013 (JP)
(74) Representative: Horn Kleimann Waitzhofer Patentanwälte PartG mbB
(86) International application number: PCT/JP2019/035565
(87) International publication number: WO 2020/054724

(57) **Abstract**

According to an embodiment, a picking system includes a picking robot, a distance sensor, an analysis unit, a storage unit, and a robot controller. The picking robot includes a robot arm configured to grip and move an item according to a command including identification information of the item. The robot controller is configured to control a moving speed of the robot arm when the item passes through a measurement range in accordance with a determination of a determination unit configured to determine whether the identification information of the item gripped by the picking robot is included in a database stored in the storage unit.

## Description

### FIELD

Embodiments described herein relate generally to a picking system, an information processing device, and a computer readable storage medium.

### BACKGROUND

In a picking operation in which an article is gripped and moved by a picking robot, it is known that the shape of the article is measured, and the posture of the article is estimated based on the measured shape. In the measurement of the shape of an article, for example, a method of matching correct data of the shape of the article, which is CAD data, with article shape data obtained by measurement is generally used. In this method, since it is necessary to prepare correct data in advance, for an article for which correct data has not been prepared, that is, an unknown item, it takes time and effort to measure the shape.

### CITATION LIST

PATENT LITERATURE 1: Jpn. Pat. Appln. KOKAI Publication No. 2010-247959

### SUMMARY

### TECHNICAL PROBLEM

In order to solve the above-mentioned problem, the object of the present application is to provide a picking system, an information processing device, and a computer-readable storage medium capable of appropriately measuring a shape of even an unknown item.

### SOLUTION TO PROBLEM

According to an embodiment, a picking system includes a picking robot, a distance sensor, an analysis unit, a storage unit, and a robot controller. The picking robot includes a robot arm configured to grip and move an item according to a command including identification information of the item. The distance sensor is installed at a position in a measurement range that is a plane through which the item is moved and passed by the robot arm, and is configured to measure a distance from the position to the item passing through the measurement range. The analysis unit is configured to calculate shape information indicating a shape of the item based on a measurement result measured by the distance sensor. The storage unit is configured to store a database in which identification information and shape information of the item are associated with each other. The robot controller is configured to control a moving speed of the robot arm when the item passes through the measurement range in accordance with a determination of a determination unit configured to determine whether the identification information of the item gripped by the picking robot is included in the database stored in the storage unit.

### BRIEF DESCRIPTION OF THE DRAWINGS

FIG. 1 is a diagram schematically showing an example of a configuration of a picking system.
FIG. 2 is a block diagram showing an example of a configuration of a picking system.
FIG. 3 is a block diagram schematically showing an example of a configuration of a picking system.
FIG. 4 is a diagram showing an example of an item database prepared in advance.
FIG. 5 is a diagram showing an example of a picking flow.
FIG. 6 is a diagram showing an example of a pull-up operation performed by a picking robot.
FIG. 7 is a diagram showing an example of an item database updated after shape measurement of an unknown item.

### DETAILED DESCRIPTION

Hereinafter, embodiments of the present invention will be described with reference to the drawings. In the present embodiment, the picking system is a gripping item shape measurement system in a picking robot using a distance sensor which is, for example, a laser range finder (LRF). In a picking system, the shape of an item gripped by a picking robot is measured without stopping the movement of the picking robot by controlling the moving speed of the robot arm of the picking robot in accordance with the item using a distance sensor such as an LRF. Here, the item refers to an article or a piece of cargo to be picked. The item may be a regular hexahedron, such as a rectangular parallelepiped, or an irregular shape.

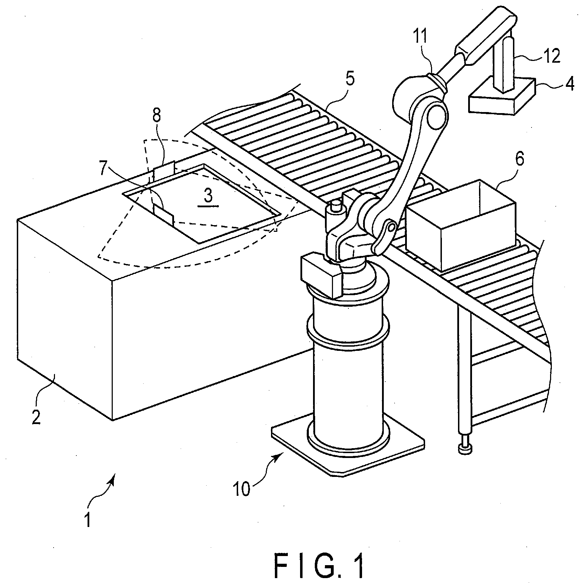

FIG. 1 is a diagram schematically showing an example of a configuration of a picking system 1. The picking system 1 includes a picking robot 10. The picking robot 10 is a cargo handling device that grips, moves, and places an item 4 at a proper position. To place means that the picking robot places and releases the gripped item 4.

The picking robot 10 performs, for example, a series of picking operations in which the picking robot 10 grips and moves an item 4 flowing on a conveyor (not shown) and coming out from an opening 3 of a table 2 and places the item 4 in a container 6 on a conveyor 5. In FIG. 1, the container 6 in which the item 4 is placed is arranged on the conveyor 5, but the arrangement of the container 6 is not limited thereto. The container 6 does not have to be on the conveyor 5. The item 4 may be placed in a location other than the container 6, such as on the conveyor 5.

The picking system 1 includes a distance sensor. In FIG. 1, as an example of the distance sensor, two LRFs 7 and 8 are shown. Each of the LRFs 7 and 8 measures a distance to the item 4 along the movement trajectory of the item 4 picked by the picking robot 10. The LRFs 7 and 8 are, for example, optical devices that emit an infrared laser to emit laser light, and measure the distance to an object which is an item gripped by the picking robot 10 based on the degree of reflection made by the object. The laser light is not limited to infrared laser light, and may be laser light such as visible laser light or ultraviolet laser light.

Each of the LRFs 7 and 8 is disposed at an arbitrary position where the item 4 passing through any position on the movement trajectory faces an irradiation unit of the LRFs 7 and 8. For example, the LRFs 7 and 8 are installed at positions on a plane set as a measurement range, through which the item 4 moved by the picking robot 10 passes. Each of the LRFs 7 and 8 scans a sector-shaped measurement range (a measurement orbit) indicated by a broken line. The LRFs 7 and 8 measure distances from the installed positions to the item 4 passing through the measurement range.

The LRFs 7 and 8 measure the distance to the item 4 at a timing when the item 4 passes a fixed point on the movement trajectory. At this time, the LRFs 7 and 8 irradiate laser light over a predetermined length on a straight line intersecting with a moving direction of the item 4. For example, the LRFs 7 and 8 linearly irradiate laser light along one direction on a horizontal plane orthogonal to the moving direction (vertical direction) of the item 4. Then, as the item 4 moves on the movement trajectory, the LRFs 7 and 8 scan (perform distance measurement of) the surface of the item 4 in a planar manner over a predetermined range. The shape of the item is calculated by an information processing device 100 described later based on the value of the measured distance.

The two LRFs 7 and 8 are disposed, for example, on the table 2 so as to be orthogonal to each other. The arrangement of the LRFs 7 and 8 is not limited to this, and may be any arrangement as long as data necessary for measuring the shape of the item can be acquired from multiple directions. For example, they may be disposed inside the opening 3. Any arrangement will do as long as the item to be picked by the picking robot 10 is disposed in a manner such that it passes through the measurement range of the LRFs 7 and 8.

Although two LRFs 7 and 8 are shown in FIG. 1, the number of LRFs is not limited thereto. A single or a plurality of LRFs may be installed. In the case where a single LRF is installed, by the LRF performing three-dimensional scanning, three-dimensional data representing the distance to the item is acquired. In the case where two LRFs are installed, by each of the LRFs performing two-dimensional scanning, three-dimensional data representing the distance to the item is acquired.

The distance sensor is not limited to the LRF. The distance sensor may be any device as long as it is able to acquire three-dimensional data of positional information, etc. up to an item gripped by the picking robot 10, and the shape of the item can be calculated by the information processing device based on this data.

The picking robot 10 includes a robot arm 11 and a gripping unit 12 provided at a distal end of the robot arm 11.

The robot arm 11 includes, for example, a plurality of arms and a plurality of joint mechanisms connecting the arms. The joint mechanism is operated under the control of a robot control device 20, which will be described later, and changes the relative angle between the two connected arms. That is, the arm is moved by the joint mechanism.

The gripping unit 12 grips the item 4. For example, the gripping unit 12 includes a suction pad for suctioning the item 4. The number of the suction pads may be one or more. In a state where the suction pad is in contact with the surface of the item 4, when the inside of the suction pad is set to a negative pressure by the control of the robot control device 20, the suction pad is vacuum-suctioned to the surface of the item 4. When the negative pressure in the suction pad is released, the suction pad releases the item 4.

The gripping unit 12 may include a gripper for clamping the item 4. Various gripping mechanisms capable of gripping an item to be picked may be employed.

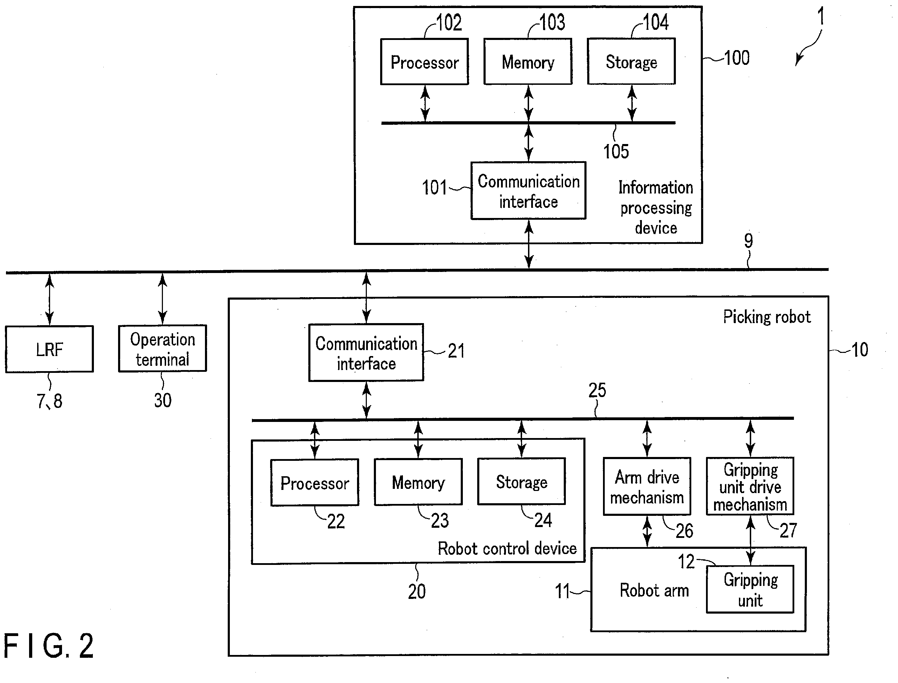

FIG. 2 is a block diagram showing an example of a configuration of the picking system 1. The picking system 1 includes the LRFs 7 and 8, the picking robot 10, an operation terminal 30, and the information processing device 100 explained with reference to FIG. 1.

The picking robot 10 includes the robot control device 20 and a communication interface 21. The robot control device 20 includes a processor 22, a memory 23, and a storage 24. The picking robot 10 includes an arm drive mechanism 26 and a gripping unit drive mechanism 27. These components can communicate with each other via a bus line 25.

The communication interface 21 is an interface used for communication with an external device. The communication interface 21 includes a terminal and a circuit corresponding to a communication standard or the like for communicating with the LRFs 7 and 8, the operation terminal 30, and the information processing device 100. The communication interface 21 communicates with the LRFs 7 and 8, the operation terminal 30, and the information processing device 100 via a network 9 under the control of the processor 22.

The processor 22 includes, for example, a central processing unit (CPU). The memory 23 includes a read only memory (ROM) that is a read-only data memory and a random access memory (RAM) that temporarily stores data. The storage 24 may be at least one of a hard disk drive (HDD) or a solid state drive (SSD). A non-transitory computer-readable storage medium of at least one of the memory 23 or the storage 24 stores a control program and data (hereinafter, referred to as a program, etc.) of each unit of the picking robot 10. For example, the communication interface 21 reads a program or the like stored in a removable storage medium such as a magnetic disk, an optical disk, or a semiconductor memory, that is, a non-transitory computer-readable storage medium, or communicates with an external server via a network to receive the program or the like from the external server. The storage 24 or the like stores the program or the like acquired by the communication interface 21, and the processor 22 completes the installation of the program or the like by executing the stored program or the like. The processor 22 performs various processes based on a program or the like stored in at least one of the memory 23 or the storage 24. That is, the processor 22 executes the control program as a software functional unit. Instead of the CPU, a control circuit such as an application specific integrated circuit (ASIC) or a field programmable gate array (FPGA) may be used as a hardware functional unit.

The arm drive mechanism 26 includes a drive source for operating the robot arm 11. The arm drive mechanism 26 operates the robot arm 11 under the control of the processor 22.

The gripping unit drive mechanism 27 includes, for example, a drive source for generating a negative pressure state in the suction pad of the gripping unit 12. The gripping unit drive mechanism 27 operates the gripping unit 12 under the control of the processor 22.

The operation terminal 30 may be, for example, a touch panel used for screen display and instruction input in the picking system 1. The operation terminal 30 may include a display device such as a display and an input device such as a keyboard or a mouse instead of the touch panel.

The information processing device 100 includes a communication interface 101, a processor 102, a memory 103, and a storage 104. These components can communicate with each other via a bus line 105.

The communication interface 101 is an interface used for communication with an external device. The communication interface 101 includes a terminal and a circuit corresponding to a communication standard or the like for communicating with the picking robot 10, the operation terminal 30, and the like. The communication interface 101 functions as, for example, a receiver that receives, from, for example, the operation terminal 30, an order including identification information of an item to be picked by the picking robot 10, that is, an item to be gripped by the gripping unit 12 of the robot arm 11.

The processor 102 includes, for example, a CPU. The memory 103 includes a ROM and a RAM. The storage 104 may be at least one of an HDD or an SSD. A non-transitory computer-readable storage medium of at least one of the memory 103 or the storage 104 stores a program or the like of each unit of the picking system 1. For example, the communication interface 101 reads a program or the like stored in a removable storage medium such as a magnetic disk, an optical disk, or a semiconductor memory, that is, a non-transitory computer-readable storage medium, or communicates with an external server via a network to receive the program or the like from the external server. The storage 104 or the like stores the program or the like acquired by the communication interface 101, and the processor 102 completes the installation of the program or the like by executing the stored program or the like. The processor 102 performs various processes based on a program or the like stored in at least one of the memory 103 or the storage 104. That is, the processor 102 executes various programs as a software functional unit. Instead of the CPU, a control circuit such as an ASIC or an FPGA may be used as a hardware functional unit.

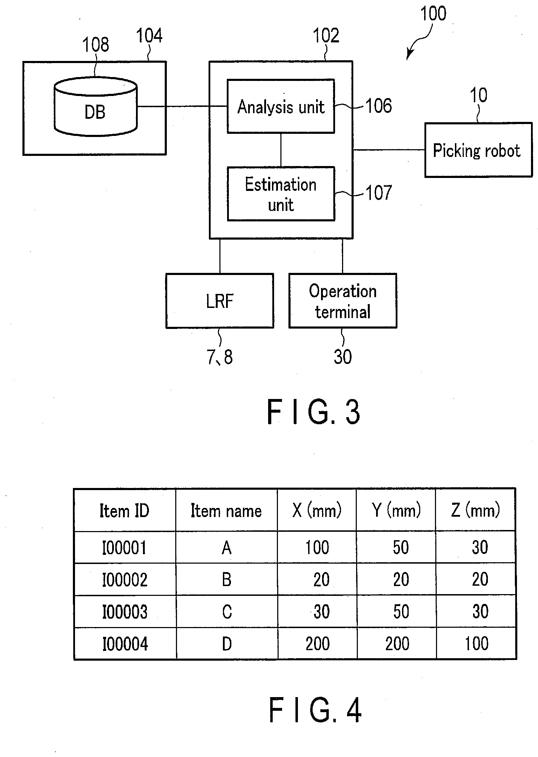

FIG. 3 is a block diagram showing an example of a configuration of peripheral devices of the information processing device 100. The information processing device 100 includes an analysis unit 106 and an estimation unit 107. The functions of the analysis unit 106 and the estimation unit 107 may be realized by the processor 102 as a software functional unit or a hardware functional unit. The information processing device 100 also includes, for example, a database (DB) 108 which is an item database described later. The DB 108 is stored in, for example, the storage 104 as a storage unit.

The information processing device 100 receives measurement data obtained by the LRFs 7 and 8. In the information processing device 100, the analysis unit 106 and the estimation unit 107 perform processing such as shape measurement based on the measurement data, collation between the shape measurement data and the shape data of an item DB, and estimation of the posture of the item.

The DB 108 includes the item DB. In the item DB, identification information of an item gripped by the picking robot and shape information of the item are stored in association with each other. The identification information and the shape information may be manually input to the item DB, for example, at the time of storage of the item. The information may be input by reading a bar code or a two-dimensional code holding the information.

FIG. 4 is a diagram showing an item table that is an example of an item DB. The entries of the item table include, for example, an item ID, an item name, and the length of three sides of an item (for example, a hexahedron), that is, the size of the item. The item ID is an identification number assigned to each item. The item name is a product name, a product code, or the like. The item ID and the item name are examples of the identification information of the item. The lengths X, Y, and Z of the three sides of the item are the vertical length, the horizontal length, and the height of the hexahedral item, respectively. The lengths of the three sides of the box-shaped item are an example of the shape information of the item.

In the picking system 1, the information processing device 100 which is, for example, a host server, controls the entire system. The information processing device 100 transmits, to the picking robot 10, an order indicating which item is to be gripped, that is, a command including the identification information of the item. The picking robot 10 performs a picking operation based on the received order. That is, the picking robot 10 grips and moves the item according to the command.

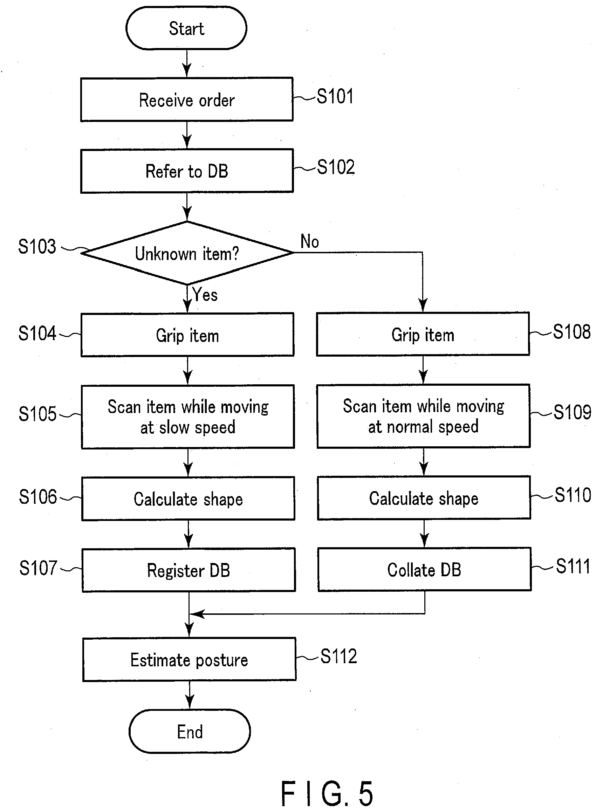

An example of the picking operation by the picking system 1 will be explained with reference to FIG. 5.

In step S101, the information processing device 100 receives an order from the operation terminal 30. The order is a command specifying which item of the identification information is to be gripped.

In step S102, the information processing device 100 refers to the item DB of the DB 108 based on the identification information of the item to be gripped.

In step S103, the information processing device 100 determines whether or not the item specified by the order is an unknown item, that is, whether the specified item is unknown or known. "Unknown" indicates that the information of the item does not exist in the item DB referred to in step S102. "Known" indicates that the information of the item exists in the item DB referred to in step S102, that is, the shape information of the item exists. In a case where the item is unknown (step S103 - Yes), the process proceeds to step S104. Then, a series of initial registration operations from step S104 to step S107 are performed. On the other hand, in a case where the item is known (step S103 - No), the process proceeds to step S108. Then, a series of normal operations from step S108 to step S111 are performed.

The initial registration operation from step S104 to step S107 will be explained below. The initial registration operation is an operation for registering item information for the first time in a case where the item information (here, shape information) does not exist in the item DB.

In step S104, the picking robot 10 grips the item with the gripping unit 12 under the control of the robot control device 20 based on the control signal received from the information processing device 100.

In step S105, the picking robot 10 gradually pulls up the gripped item within the measurement range of the LRFs 7 and 8, that is, in the measurement orbit, and has the LRFs 7 and 8 scan the entire item. In other words, the picking robot 10 has the LRFs 7 and 8 perform scanning while moving the gripped item at a low speed.

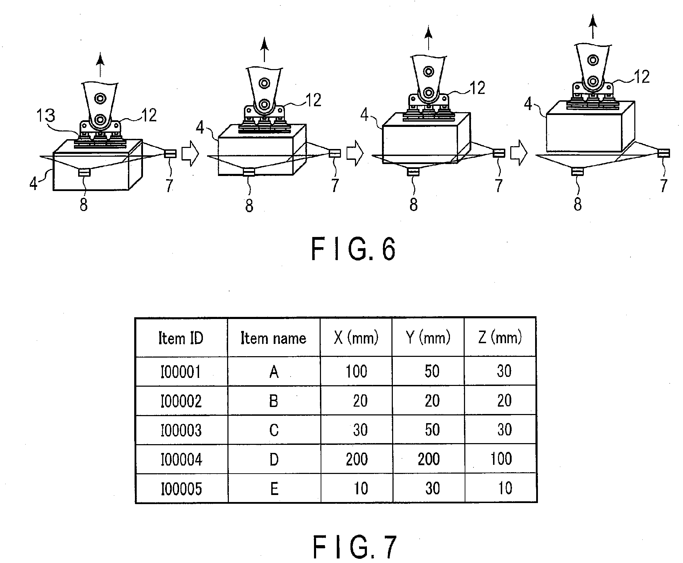

FIG. 6 is a diagram exemplifying an operation in which the gripping unit 12 pulls up the item 4 gripped by the suction pad 13 during the scanning performed by the LRFs 7 and 8. The LRFs 7 and 8 measure at least two or more distances of the item 4 for a predetermined time. For example, the two LRFs 7 and 8 measure the distances from the LRFs 7 and 8 to the item 4 by oscillating and irradiating laser light to different surfaces of the item 4 being pulled up. The pull-up operation itself is common to the initial registration operation and the normal operation except for the pull-up speed. Scanning is performed by the LRFs 7 and 8 without stopping the pull-up operation.

Here, the item being gripped is an unknown item for which shape information is not registered. In the case where the picking robot 10 is gripping an unknown item, the speed at which the robot arm 11 is moved is set to be slower than the normal speed (for example, the speed at which the robot arm 11 picking a known item is moved). If the moving speed of the robot arm 11 is slow, the pull-up speed of the item becomes slow, and the value of the distance to the item acquired by the LRFs 7 and 8, that is, the amount of data obtained per unit time, becomes large.

In step S106, the analysis unit 106 of the information processing device 100 calculates the shape information indicating the shape of the item based on data of the distances measured by the LRFs 7 and 8 in step S105, that is, a measurement result obtained by the distance sensor. In the case of an unknown item, since the amount of data for distance measurement is large, the accuracy of the shape information of the item to be calculated is high.

In step S107, the information processing device 100 newly registers the shape information of the item calculated in step S106 in the item DB of the DB 108 in association with the identification information of the item.

For example, as in the item table shown in FIG. 7, the field of the entry of item ID: 100005 is added to the item table shown in FIG. 4, and the shape information of the item is registered. In the item table shown in FIG. 7, values of X: 10 [mm], Y: 30 [mm], and Z: 10 [mm] are newly registered as the shape information associated with the item identification information of the item ID: 100005 and the item name: E.

The normal operation from step S108 to step S111 will be explained below. The normal operation is an operation for collating information of an item (here, shape information) in a case where the information of the item exists in the item DB.

In step S108, the picking robot 10 grips the item with the gripping unit 12 under the control of the robot control device 20 based on the control signal received from the information processing device 100.

In step S109, the picking robot 10 rapidly pulls up the gripped item within the measurement range of the LRFs 7 and 8, that is, in the measurement orbit, and has the LRFs 7 and 8 scan the entire item. In other words, the picking robot 10 has the LRFs 7 and 8 perform scanning while moving the gripped item at a normal speed. The normal speed is a speed at which an amount of distance measurement data sufficient for collation with the shape information of the item registered in the item DB can be obtained. The normal speed is a speed faster than the pull-up speed in step S105. Here, the gripped item is a known item for which the shape information is registered. In the case where the picking robot 10 is gripping a known item, the speed at which the robot arm 11 is moved is set to the normal speed.

In step S110, the information processing device 100 calculates the shape of the item based on data of the distances measured by the LRFs 7 and 8 in step S109.

In step Sill, the analysis unit 106 of the information processing device 100 compares the shape information of the item calculated in step S110 with the shape information of the item already registered in the item DB of the DB 108. That is, the information processing device 100 collates the shape information of the item. In the case of a known item, the speed at which the item is pulled up is faster than in the case of an unknown item. Therefore, the amount of distance measurement data used to calculate the shape of the item in step S110 is smaller than that at the initial registration. However, the accuracy of the shape information calculated in step S110 is assumed to be sufficient for comparison, for example, through collation, with the shape information of the registered item.

In the case where they are significantly different from each other as a result of the collation, the information processing device 100 may output an error, may output a command to stop the picking operation, or the like. By the collation processing, it is possible to detect a malfunction such as a case where two items are unintentionally gripped at the same time or a case where an item different from the order is gripped. As a result of the collation, if they are substantially a match, the information processing device 100 may determine that the desired item is appropriately gripped.

After step S107 or step Sill, the process proceeds to step S112. In step S112, the estimation unit 107 of the information processing device 100 estimates the posture of the item based on the distances to the item measured by the LRFs 7 and 8. The posture of the item indicates the orientation and position at which the item is gripped with respect to the gripping unit 12. The posture of the item is calculated based on, for example, the shape information of the item calculated in step S106 or S107 and state information indicating the state of the robot arm 11. The state information of the robot arm 11 is acquired from the robot control device 20. After the posture of the item is estimated, the process ends.

Note that the calculation of the shape of the known item and the collation with the DB in step S110 and step Sill may be performed in parallel with the process of step S109, and the collation may be ended if an approximate match is confirmed.

As explained above, in the present embodiment, the picking system 1 includes the picking robot 10 including the robot arm 11 that grips and moves the item 4 in accordance with the command including the identification information of the item, the distance sensor, for example, LRFs 7 and 8, installed at a position in a measurement range that is a plane through which the item 4 is moved and passed by the robot arm 11, and measuring the distance from such position to the item passing through the measurement range, the analysis unit 106 calculating the shape information indicating the shape of the item 4 based on the measurement result measured by the distance sensor, and the storage unit, for example, the storage 104, storing the database 108 in which the identification information and the shape information of the item are associated with each other. The picking system 1 also includes a robot controller, for example, the processor 22 of the robot control device 20, which controls the moving speed of the robot arm 11 when the item 4 passes through the measurement range according to a determination of a determination unit (for example, the processor 102 of the information processing device 100) that determines whether or not the identification information of the item 4 gripped by the picking robot 10 is included in the database 108 stored in the storage unit.

According to the present embodiment, in the picking system 1, by using the LRFs 7 and 8 as the distance sensor for measuring the shape of the item, it is possible to measure the shape of the item without stopping the movement of the robot arm 11.

For example, in the case of measuring the shape of an item by using a stereo camera, it is necessary to temporarily stop the movement of the robot arm 11 to perform imaging. Stopping such movement may cause the tact time to be extended due to the time required for the stopping process and the resuming process. According to the present embodiment, since the scanning is performed by the LRFs 7 and 8 during the pull-up operation by the robot arm 11, the tact time would not be extended by stopping the movement of the robot arm 11.

LRFs are also less expensive than stereo cameras. Therefore, it is possible to measure the shape of an unknown item using a relatively inexpensive distance sensor. Even if a plurality of LRFs, for example, two LRFs are installed, it is cheaper than installing a stereo camera. By using a plurality of LRFs arranged so as to measure the distance to an item moved by the robot arm 11 from different directions, the shape of an unknown item can be measured inexpensively and accurately.

In the present embodiment, the robot control device 20 as a robot controller controls the moving speed of the robot arm 11 when the item passes through the measurement range of the LRFs 7 and 8 in accordance with the determination as to whether the item is known or unknown. For example, the robot control device 20 controls the speed such that, in a case of pulling up an unknown item whose shape information is not registered in the DB108, the speed at which the robot arm 11 moves is slower than the speed at which the robot arm 11 moves in the case of pulling up a known item whose shape information is registered in DB 108. As a result, the amount of data obtained from the LRFs 7 and 8 per unit time for the unknown item becomes larger than the amount of data obtained for the known item. Therefore, a sufficient amount of data can be secured for the unknown item. This allows the accuracy of the shape measurement for the unknown item to be enhanced.

According to the present embodiment, the information processing device 100 makes it possible to create the shape information of the unknown item, and incorporate and register the shape information in the DB108. The shape information of the unknown item that is registered can be used as the shape information of an item in the case where an item having the same identification information is picked next. As a result, the working efficiency is improved, and the tact time is shortened.

In addition, since the posture estimation is performed with respect to both the known item and the unknown item based on the shape information, the gripped item can be moved to an appropriate place or can be released at an appropriate height.

For example, other controls may be performed in addition to controlling the speed of the robot arm 11 according to whether the shape information of the item is known or unknown. For example, in the case where the shape information of the item is known, the processing efficiency can be improved by pulling up the item in an oblique direction.

Furthermore, even if the shape information of the item is known, the speed of the robot arm 11 may be controlled according to the shape information. For example, in the case of a thick item, that is, an item having a large value in the height direction, since the influence on the accuracy of the shape information is small even when the amount of data obtained from the LRFs 7 and 8 is small, shape information with sufficient accuracy can be obtained even if the robot arm 11 is moved fast. On the other hand, in the case of a thin item, that is, an item having a small value in the height direction, shape information with sufficient accuracy cannot be obtained unless the amount of data obtained from the LRFs 7 and 8 is large. Therefore, the robot arm 11 is moved slowly.

While certain embodiments have been described, these embodiments have been presented by way of example only, and are not intended to limit the scope of the invention. These new embodiments can be implemented in various other forms. Various omissions, replacements, and changes can be made without departing from the spirit of the invention. The accompanying claims and their equivalents are intended to cover such forms or modifications as would fall within the scope and spirit of the inventions.

## Claims

1. A picking system comprising:
a picking robot including a robot arm configured to grip and move an item according to a command including identification information of the item;
a distance sensor installed at a position in a measurement range that is a plane through which the item is moved and passed by the robot arm, and configured to measure a distance from the position to the item passing through the measurement range;
an analysis unit configured to calculate shape information indicating a shape of the item based on a measurement result measured by the distance sensor;
a storage unit configured to store a database in which identification information and shape information of the item are associated with each other; and
a robot controller configured to control a moving speed of the robot arm when the item passes through the measurement range in accordance with a determination of a determination unit configured to determine whether the identification information of the item gripped by the picking robot is included in the database stored in the storage unit.

2. The picking system according to claim 1, wherein the distance sensor measures a distance between at least two points on the item for a predetermined period of time.

3. The picking system according to claim 1, wherein, in a case where the determination unit determines that the identification information is not included in the database, the robot controller makes the moving speed slower than in a case where the determination unit determines that the identification information is included in the database.

4. The picking system according to any one of claims 1 to 3, wherein a plurality of the distance sensors are installed.

5. The picking system according to claim 4, wherein the plurality of distance sensors are each installed at the position in such a manner as to measure a distance to the item relative to a different surface of the item.

6. The picking system according to any one of claims 1 to 5, further comprising an estimation unit configured to estimate a posture of the item based on the distance to the item measured by the distance sensor.

7. An information processing device comprising:
an analysis unit configured to calculate shape information indicating a shape of an item based on a measurement result measured by a distance sensor installed at a position in a measurement range that is a plane through which the item passes and is configured to measure a distance from the position to the item passing through the measurement range in a case where the item is moved by a robot arm of a picking robot, the robot arm configured to grip and move the item in accordance with a command including identification information of the item;
a storage unit configured to store a database in which identification information and shape information of the item are associated with each other; and
a robot controller configured to control a moving speed of the robot arm when the item passes through the measurement range in accordance with a determination of a determination unit configured to determine whether or not the identification information of the item gripped by the picking robot is included in the database stored in the storage unit.

8. A non-transitory computer-readable storage medium storing a program for causing a computer to:
calculate shape information indicating a shape of the item based on a measurement result measured by a distance sensor installed at a position in a measurement range that is a plane through which the item passes and that measures a distance from the position to the item passing through the measurement range in a case where the item is moved by a robot arm of a picking robot, the robot arm configured to grip and move the item in accordance with a command including identification information of the item; and
control a moving speed of the robot arm when the item passes through the measurement range in accordance with a determination of a determination unit configured to determine whether or not identification information of the item gripped by the picking robot is included in a database in which the identification information and the shape information of the item are associated with each other.
